# EUROPÄISCHE PATENTANMELDUNG

(11) **EP 3 028 887 A1**
(43) Veröffentlichungstag der Anmeldung: **08.06.2016**
(21) Anmeldenummer: 14196375.1
(22) Anmeldetag: 04.12.2014
(51) Int. Cl.: B60J 7/16, B60J 5/06

(54) **Planenbefestigungselement und Planenverriegelungsvorrichtung für Nutzfahrzeuge**

(71) Anmelder: Fliegl, Helmut, 07819 Triptis (DE)
(72) Erfinder: Fliegl, Helmut, 07819 Triptis (DE)
(74) Vertreter: Kramer Barske Schmidtchen Patentanwälte PartG mbB

(57) **Zusammenfassung**

Die vorliegende Erfindung betrifft ein Planenbefestigungselement (150) zum lösbaren Befestigen einer Plane (120) eines Nutzfahrzeugaufbaus an einem Rahmengestell (102). Das Planenbefestigungselement (150) weist einen Hauptkörper (152) auf, der einen Planenbefestigungsbereich (153), der dazu ausgebildet ist, den Hauptkörper (152; 352) mit der Plane (120) nicht lösbar zu verbinden, und einen Planenverriegelungsbereich (154) hat, der dazu ausgebildet ist, mit der Planenverriegelungsvorrichtung (140) lösbar einzugreifen. Das Planenbefestigungselement weist ferner einen am Hauptkörper (152) vorhandenen Permanentmagnet (155) auf, der dazu ausgebildet ist, an der Planenverriegelungsvorrichtung (140) magnetisch zu haften, wenn der Hauptkörper (152) mit der Planenverriegelungsvorrichtung (140) eingreift.

## Beschreibung

### Technisches Gebiet

Die vorliegende Erfindung betrifft ein Planenbefestigungselement für ein Nutzfahrzeug, wie z. B. einen Lastkraftwagen oder einen Sattelanhänger, eine Planenverriegelungsvorrichtung und einen Nutzfahrzeugaufbau für ein Nutzfahrzeug, wie z. B. einen Lastkraftwagen oder einen Sattelanhänger.

### Technischer Hintergrund

Sattelanhänger können über eine Sattelkupplung mit einem Zugfahrzeug verbunden werden und weisen üblicherweise ein Rahmengestell auf, das zumindest einen Teil eines Laderaums für Transportgüter bereitstellt. Das Rahmengestell besteht zumeist aus einer ebenen Grundfläche, die die Ladefläche bildet, und mehreren vertikalen Streben, die sich von der Grundfläche nach oben erstrecken.

Eine Plane kann auf wenigstens einer Seite des Sattelanhängers oder des Nutzfahrzeugs befestigt und wie eine Gardine zwischen einer geöffneten und einer geschlossen Stellung verschiebbar sein. Die Plane ist am Dach über Schienen befestigt, die die Verschiebbarkeit der Plane ermöglichen. Beispielsweise ist die Plane aus der geschlossenen Stellung in die geöffnete Position dadurch bringbar, dass die Plane von vorne nach hinten geschoben wird und sich die Plane im hinteren Bereich zusammenschiebt. Somit kann der Sattelanhänger von der wenigstens einen Seite be- und entladen werden. Nach dem Be- bzw. Entladevorgang wird die Plane in die geschlossene Position verschoben und im Beispiel von vorne und unten am Rahmengestell befestigt, so dass sich die Plane nicht versehentlich während der Fahrt öffnen kann.

Aus der noch nicht veröffentlichten Europäischen Patentanmeldung Nr. 13 171 001.4 ist eine beispielhafte Planenbefestigungsvorrichtung bekannt, mit der die Plane am Rahmengestell befestigt werden kann.

Ein der Erfindung zugrunde liegendes technisches Problem besteht darin, einen Nutzfahrzeugaufbau mit Seitenplane bereitzustellen, der eine verbesserte Handhabung zulässt. Zudem sind ein verbessertes Planenbefestigungselement und eine verbesserte Planenverriegelungsvorrichtung für einen solchen Nutzfahrzeugaufbau bereitzustellen.

### Darstellung der Erfindung

Gemäß einem Aspekt der vorliegenden Erfindung ist ein Planenbefestigungselement zum lösbaren Befestigen einer Plane eines Nutzfahrzeugaufbaus an einem Rahmengestell des Nutzfahrzeugaufbaus offenbart. Der Nutzfahrzeugaufbau weist das Rahmengestell, das zusammen mit der Plane einen Laderaum begrenzt, und eine am Rahmengestell angebrachte Planenverriegelungsvorrichtung auf. Das erfindungsgemäße Planenbefestigungselement hat einen Hauptkörper, der einen Planenbefestigungsbereich und einen Planenverriegelungsbereich aufweist. Der Planenbefestigungsbereich ist dazu ausgebildet, den Hauptkörper mit der Plane nicht lösbar zu verbinden. Der Planenverriegelungsbereich ist dazu ausgebildet, mit der Planenverriegelungsvorrichtung lösbar einzugreifen. Das erfindungsgemäße Planenbefestigungselement weist ferner einen am Hauptkörper vorhandenen Permanentmagnet auf, der dazu ausgebildet ist, an der Planenverriegelungsvorrichtung magnetisch zu haften, wenn der Hauptkörper mit der Planenverriegelungsvorrichtung eingreift.

Gemäß einem weiteren Aspekt der vorliegenden Erfindung ist eine Planenverriegelungsvorrichtung zum lösbaren Befestigen einer Plane eines Nutzfahrzeugaufbaus an einem Rahmengestell des Nutzfahrzeugaufbaus offenbart. Der Nutzfahrzeugaufbau weist das Rahmengestell auf, das zusammen mit der Plane einen Laderaum begrenzt auf. Die am Rahmengestell angebrachte erfindungsgemäße Planenverriegelungsvorrichtung weist wenigstens ein Planenverriegelungselement auf, das dazu ausgebildet ist, mit wenigstens einem an der Plane nicht lösbar befestigten Planenbefestigungselement lösbar einzugreifen und die Plane am Rahmengestell zu befestigen. Die Planenverriegelungsvorrichtung weist außerdem wenigstens einen am Planenverriegelungselement vorhandenen Permanentmagnet auf, der dazu ausgebildet ist, das wenigstens eine Planenbefestigungselement magnetisch zu halten, wenn das Planenverriegelungselement mit dem Planenbefestigungselement lösbar eingreift.

Mit dem erfindungsgemäßen Planenbefestigungselement und der erfindungsgemäßen Planenverriegelungsvorrichtung kann durch den Permanentmagnet sichergestellt werden, dass sich das Planenbefestigungselement vor dem Verriegeln nicht von der Planenverriegelungsvorrichtung löst. Der Permanentmagnet kann entweder am Planenbefestigungselement oder an der Planenverriegelungsvorrichtung angebracht sein oder mit jeweils einem der Elemente integral ausgeführt sein.

In einer beispielhaften Ausgestaltung der Erfindung sind der Permanentmagnet und der Hauptkörper des Planenbefestigungselements zumindest teilweise integral ausgeführt, d. h. dass der Hauptkörper zumindest teilweise aus einem permanentmagnetischen Material geformt ist. Bevorzugt besteht der gesamte Hauptkörper aus einem permanentmagnetischen Material.

Eine weitere beispielhafte Ausführungsform sieht vor, den Permanentmagnet als separates Element am Hauptkörper des Planenbefestigungselements anzubringen, beispielsweise den Hauptkörper zumindest teilweise mit einer permanentmagnetischen Beschichtung zu beschichten. Der Permanentmagnet ist bevorzugt am Planenverriegelungsbereich angebracht.

Gemäß einer erfindungsgemäßen Ausführungsform weist der Hauptkörper wenigstens eine Öffnung auf, die im Planenverriegelungsbereich angeordnet ist. Die wenigstens eine Öffnung ist dazu ausgebildet, mit dem Verriegelungselement der Planenverriegelungsvorrichtung einzugreifen. Das Verriegelungselement ist bevorzugt ein an der Planenverriegelungsvorrichtung gebildeter Vorsprung, beispielsweise in der Form eines Hakens oder einer Erhebung.

In einer weiteren beispielhaften Ausgestaltung ist der Planenverriegelungsbereich als plattenförmiges Element ausgebildet. In dieser Ausgestaltung kann die Planenverriegelungsvorrichtung eine Welle mit zumindest einer ebenen Fläche und zumindest einer an die ebene Fläche angrenzenden Verriegelungskante aufweisen. Der plattenförmige Planenverriegelungsbereich kann mit der ebenen Fläche magnetisch verbunden werden und bei Drehung der Welle die Plane am Rahmengestell anbringen und spannen.

Bevorzugt ist der Permanentmagnet und/oder der Hauptkörper zumindest teilweise mit einer Kunststoffschicht überzogen, damit Stöße zwischen dem Planenbefestigungselement und der Planenverriegelungsvorrichtung gedämpft und vom Kunststoffüberzug absorbiert werden können.

Das permanentmagnetische Material ist beispielsweise ein hartmagnetisches Ferritmaterial oder eine Legierung aus Eisen, Nickel und/oder Aluminium, bevorzugt mit Zusätzen von Kobalt, Mangan und/oder Kupfer. In einer weiteren Ausführungsform ist der Permanentmagnet ein kunststoffgebundener Magnet, der aus einem Magnetpulver-Kunststoff-Gemisch besteht.

Der Permanentmagnet weist eine magnetische Flussdichte auf, die beispielsweise zwischen ungefähr 0,001 T und ungefähr 0,2 T liegt. In manchen Fällen kann die magnetische Flussdichte einen Wert von bis zu 5 T aufweisen. Vorzugsweise ist die magnetische Flussdichte des Permanentmagneten derart bemessen, dass sich der Hauptkörper des Planenbefestigungselements von der sich in der entriegelten Stellung befindlichen Verriegelungsvorrichtung unter Einwirkung der Gewichtskraft auf den Hautkörper lösen kann.

In weiteren erfindungsgemäßen Ausgestaltungen kann die magnetische Flussdichte des Permanentmagneten derart bemessen sein, dass sich der Hauptkörper des Planenbefestigungselements unter Einwirkung der Gewichtskraft auf den Hauptkörper nicht löst. In einer solchen Ausgestaltung kann der Hauptkörper unter Krafteinwirkung des Bedieners des Nutzfahrzeugs, beispielsweise während dem gardinenartigen Öffnen der Plane, von der Planenverriegelungsvorrichtung gelöst werden.

Gemäß einer weiteren beispielhaften Ausgestaltung ist das Verriegelungselement eine starr am Rahmengestell angebrachte Verriegelungsleiste, die sich im Wesentlichen entlang des Nutzfahrzeugaufbaus erstreckt und dazu ausgebildet ist, mit dem wenigstens einen Planenbefestigungselement einzugreifen. Die Verriegelungsleiste ist bevorzugt ein am Rahmengestell vertikal angebrachter plattenförmiger Vorsprung.

Der Hauptkörper des Planenbefestigungselements ist bevorzugt ein plattenartiger Körper. Somit kann die Befestigungsvorrichtung einfach und kostengünstig hergestellt werden. Beispielweise besteht der Hauptkörper aus Stahl, Edelstahl, Aluminium, Kupfer, Nickel, ferromagnetischem Material oder einem anderen geeigneten Material, das den auftretenden Zugkräften standhalten kann und an dem ein Permanentmagnet befestigt oder mit dem Hauptkörper integral ausgeführt werden kann. Alternativ ist die Form des Hauptkörpers durch ein gebogenes Rundmaterial wie Rundstahl oder dergleichen hergestellt.

Im Rahmen der vorliegenden Offenbarung ist unter einem am Hauptkörper bzw. am Planenverriegelungselement vorhandenen Permanentmagnet zu subsummieren, dass der Permanentmagnet als separates Element am Hauptkörper bzw. am Planenverriegelungselement angebracht ist, beispielsweise angeklebt, angeschweißt oder anderweitig daran befestigt, oder der Hauptkörper bzw. das Planenverriegelungselement mit dem Permanentmagnet integral ausgeführt ist, d. h. dass der Permanentmagnet die Form des Hauptkörpers bzw. Verriegelungselements annimmt. Ebenfalls ist unter einem am Hauptkörper bzw. am Planenverriegelungselement vorhandenen Permanentmagnet eine zumindest teilweise daran aufgebrachte, magnetische Beschichtung zu subsummieren.

### Kurze Beschreibung der Zeichnungen

Weitere Merkmale und Aspekte der vorliegenden Erfindung werden durch die folgende Beschreibung und die beiliegenden Zeichnungen offensichtlich, in denen:
Fig. 1 eine schematische Seitenansicht eines Sattelanhängers zeigt, der ein sich in der ausgefahrenen Position befindliches Hubdach und ein erfindungsgemäßes Planenbefestigungselement und eine erfindungsgemäße Planenverriegelungsvorrichtung aufweist,
Fig. 2 eine perspektivische Unteransicht des Rahmengestells des Sattelanhängers der Fig. 1 zeigt, dass eine Ausgestaltung einer erfindungsgemäßen Planenverriegelungsvorrichtung und mehrere beispielhafte erfindungsgemäße Planenbefestigungselemente aufweist, die von der Planenverriegelungsvorrichtung gelöst sind,
Fig. 3 eine Draufsicht des erfindungsgemäßen Planenbefestigungselements der Fig. 2 darstellt,
Fig. 4 eine Draufsicht einer weiteren Ausgestaltung eines erfindungsgemäßen Planenbefestigungselements darstellt,
Fig. 5 eine perspektivische Unteransicht des Rahmengestells des Sattelanhängers der Fig. 1 zeigt, das eine weitere Ausführung einer erfindungsgemäßen Planenverriegelungsvorrichtung und eine weitere Ausgestaltung eines Planenbefestigungselements aufweist, die von der Planenverriegelungsvorrichtung gelöst sind,
Fig. 6 eine perspektivische Ansicht einer weiteren Ausführung eines erfindungsgemäßen Planenbefestigungselements zeigt,
Fig. 7 eine perspektivische Seitenansicht eines Sattelanhängers der Fig. 1 zeigt, der eine weitere erfindungsgemäße Verriegelungsvorrichtung und mehrere Planenbefestigungselemente gemäß der Fig. 6 aufweist, und
Fig. 8 eine weitere Ansicht der in der Fig. 7 gezeigten Verriegelungsvorrichtung und der Planenbefestigungselemente zeigt.

### Ausführliche Beschreibung von Ausführungsbeispielen

Der vorliegenden Erfindung liegt der Gedanke zu Grunde, ein Planenbefestigungselement und eine Planenverriegelungsvorrichtung bereitzustellen, die miteinander magnetisch wechselwirken bzw. miteinander magnetisch verbunden werden können. Ein Permanentmagnet ist hierzu entweder am Planenbefestigungselement oder an der Planenverriegelungsvorrichtung vorhanden. Bevorzugt ist der Permanentmagnet mit dem Planenbefestigungselement oder einem der Elemente der Planenverriegelungsvorrichtung integral ausgeführt. Bevor die Plane mittels der Planenverriegelungsvorrichtung am Rahmengestell befestigt und gespannt wird, kann über die magnetische Wechselwirkung bzw. über die magnetische Verbindung ein Lösen des Planenbefestigungselements von der Planenverriegelungsvorrichtung verhindert werden.

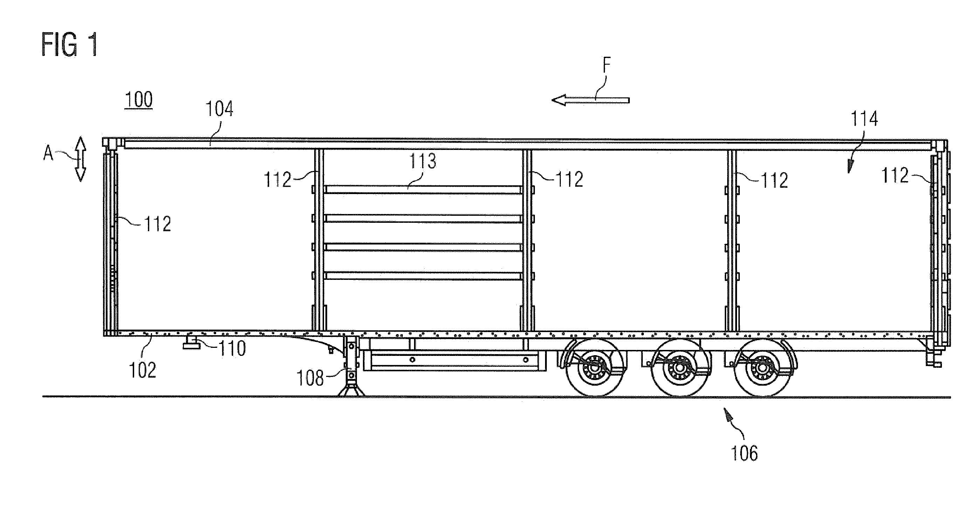

Eine erste beispielhafte Ausführungsform der vorliegenden Erfindung ist aus den Fig. 1 bis 4 ersichtlich. Der in der Fig. 1 gezeigte Sattelanhänger 100 umfasst ein Rahmengestell 102, ein am Rahmengestell 102 angebrachtes Fahrwerk 106, eine Stütze 108 und eine Verbindungseinrichtung 110 zum Verbinden des Sattelanhängers 100 mit einem Zugfahrzeug (nicht gezeigt). Die Verbindungseinrichtung 110 kann, wie in der Fig. 1 dargestellt, ein sogenannter Königszapfen sein, der in eine sich am Zugfahrzeug befindende Sattelkupplung eingreifen kann. Alternativ kann der Sattelanhänger 100 über eine sogenannte Zugmaulkupplung mit einem Zugfahrzeug lösbar verbunden werden.

Der in der Fig. 1 beispielhaft dargestellte Sattelanhänger 100 weist ferner ein am Rahmengestell 102 höhenverstellbar angebrachtes Hubdach 104 auf. In weiteren Ausgestaltungen kann der Sattelanhänger 100 ohne Hubdach 104 bereitgestellt sein.

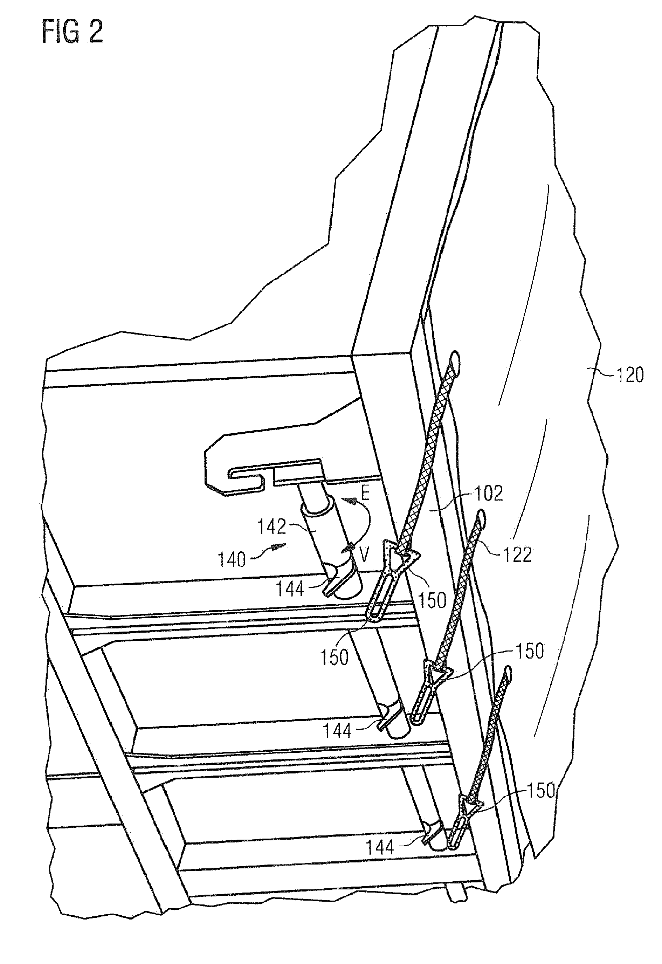

Das Rahmengestell 102 weist vertikale Streben 112 auf, die gemeinsam mit dem Hubdach 104 und einer in der Fig. 1 nicht explizit dargestellten Plane 120 (siehe Fig. 2) einen Laderaum 114 begrenzen. Zur Versteifung der vertikalen Streben 112 sind zusätzlich horizontale Streben 113 angeordnet. Die vertikalen Streben 112 sind als Teleskopstreben ausgebildet, um die Höhenverstellbarkeit des Hubdaches 104 zu gewährleisten.

Die obere Seite der Plane 120 (siehe Fig. 2) ist am Hubdach 104 derart befestig, dass die Plane 120 von vorne nach hinten parallel zu einer Längsrichtung F des Sattelanhängers 100 wie eine Gardine bewegt werden kann, um den Laderaum 114 von einer Sattelanhängerseite zugänglich zu machen. Die Beweglichkeit der Plane 120 kann mittels einem Schienensystem (in den Zeichnungen nicht explizit dargestellt) ermöglicht werden, das bevorzugt am Hubdach 104 und/oder am Rahmengestell 102 angeordnet ist. Wird die Plane 120 aus der geschlossenen Position in die geöffnete Position verschoben, können Transportgüter von der Sattelanhängerseite in den Laderaum 114 gebracht werden.

Wird ferner das Hubdach 104 in die ausgefahrene Position gebracht, ist der Laderaum 114 vergrößert und die Beladung des Laderaums 114 vereinfacht. Der Doppelpfeil A in der Fig. 1 stellt die Bewegungsrichtungen des Hubdachs 104 dar.

Um das Hubdach 104 aus der eingefahrenen Position in die ausgefahrene Position zu bewegen, kann am Sattelanhänger 100 eine Bewegungsvorrichtung (in den Zeichnungen nicht explizit dargestellt) angeordnet sein, die mechanisch, pneumatisch, hydraulisch oder elektrisch arbeitet.

Ist die Plane 120 in der geschlossenen Position, d. h. wenn die Öffnung zum Laderaum 114 verschlossen ist, so kann die Plane 120 über mehrere in der Fig. 2 beispielhaft gezeigte Planenbefestigungselemente 150 am Rahmengestell 102 mit Hilfe einer in der Fig. 2 beispielhaft gezeigten Planenverriegelungsvorrichtung 140 befestigt werden.

In der Fig. 2 ist eine Unteransicht auf das Rahmengestell 102 gezeigt, in der sich die Plane 120 zwar in der geschlossen Position befindet, aber nicht am Rahmengestell 102 befestigt ist. Wie die Fig. 2 zeigt, weist das Rahmengestell 102 die Planenverriegelungsvorrichtung 140 auf, die eine am Rahmengestell 102 drehbar gelagerte Welle 142 und wenigstens ein daran befestigtes Verriegelungselement 144 aufweist. Das Verriegelungselement 144 ist bevorzugt als Vorsprung oder, wie in der Fig. 2 gezeigt, als Haken ausgebildet und die Welle 142 ist bevorzugt über eine Betätigungsvorrichtung (in den Zeichnungen nicht explizit dargestellt) in einer Verriegelungsrichtung V und einer Entriegelungsrichtung E drehbar, so dass das wenigstens eine Verriegelungselement 144 aus einer verriegelten Stellung in eine entriegelte Stellung drehbar ist. In der Fig. 2 ist die Welle 142 in einer Stellung zwischen der vollständig verriegelten Position und der vollständig entriegelten Position gezeigt.

Die Plane 120 weist wenigstens einen Gurt 122 auf, an dem wenigstens ein erfindungsgemäßes Planenbefestigungselement 150 befestigt ist. Der wenigstens eine Gurt 122 erstreckt sich von der Plane 120 im Wesentlichen nach unten und bildet einen Übergang zwischen der Plane 120 und dem Planenbefestigungselement 150. Soll die Plane 120 in der geschlossenen Position am Rahmengestell befestigt werden, werden zunächst sämtliche Planenbefestigungselemente 150 mit den zugeordneten Verriegelungselementen 144 in Eingriff gebracht. Die Welle befindet sich dabei bevorzugt in einer Position zwischen der vollständig verriegelten und der vollständig entriegelten Position, so dass die Planenbefestigungselemente 150 beim einhaken bzw. eingreifen in die Verriegelungselemente 144 zumindest teilweise mechanisch gesichert sind. Im Anschluss daran wird die Welle 142 in der Verriegelungsrichtung V gedreht, so dass die Plane 120 im Wesentlichen nach unten gezogen und gestrafft wird und somit am unteren Bereich des Rahmengestells 102 befestigt ist.

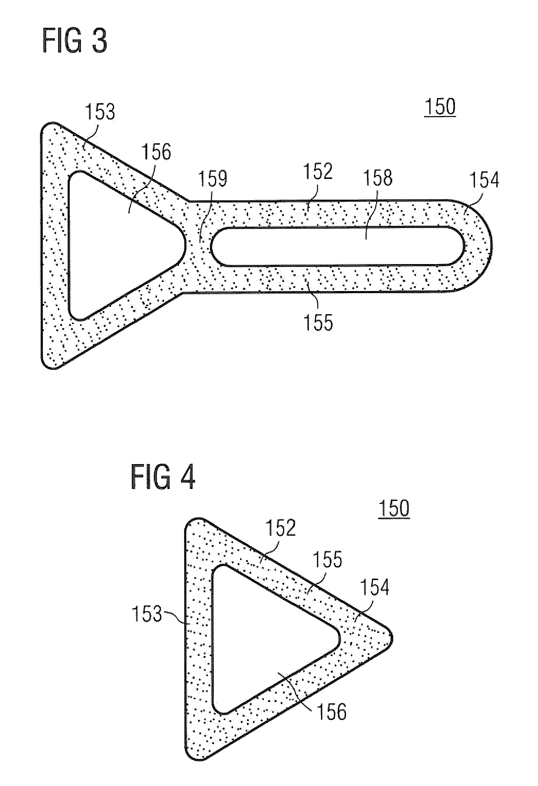

In der Fig. 3 ist ein in der Fig. 2 beispielhaft offenbartes Planenbefestigungselement 150 detaillierter dargestellt. Das in der Fig. 3 gezeigte Planenbefestigungselement 150 weist einen Hauptkörper 152 auf, der einen Planenbefestigungsbereich 153 und einen Planenverriegelungsbereich 154 umfasst. Der Planenbefestigungsbereich 153 ist dazu ausgebildet, den Hauptkörper 152 nicht lösbar mit der Plane 120, genauer gesagt mit einem Gurt 122, zu verbinden. Der Planenverriegelungsbereich 154 ist dazu ausgebildet, den Hauptkörper 152 lösbar mit der Planenverriegelungsvorrichtung 140 (siehe Fig. 2), genauer gesagt mit einem Verriegelungselement 144, zu verbinden und mit der Planenverriegelungsvorrichtung 140 einzugreifen.

Bevorzugt ist der Hauptkörper 152 beispielsweise als plattenförmiger Körper mit im Wesentlichen konstanter Dicke ausgebildet. Der Planenbefestigungsbereich 153 ist mit einer ersten Öffnung 156 versehen und der Planenverriegelungsbereich 154 ist mit einer zweiten Öffnung 158 versehen.

Der Planenbefestigungsbereich 153 hat im Wesentlichen eine dreieckige Gestalt, wobei sich der Planenverriegelungsbereich 154 von einer Ecke des dreieckigen Planenbefestigungsbereichs 153 in einer länglichen Gestalt erstreckt. Die erste Öffnung 156 weist ebenfalls eine im Wesentlichen dreieckige Form auf und die zweite Öffnung 158 ist in Form eines Langloches bereitgestellt. Die erste Öffnung 156 und die zweite Öffnung 158 sind durch einen Steg 159 voneinander getrennt.

Das in der Fig. 3 beispielhaft dargestellte Planenbefestigungselement 150 weist ferner einen Permanentmagnet 155 auf, der mit dem Planenverriegelungsbereich 154 und dem Planenbefestigungsbereich 153 integral ausgeführt ist (siehe gepunktete Fläche in Fig. 3), d. h. dass der gesamte Hauptkörper 152 aus einem permanentmagnetischen Material geformt ist. In anderen Ausführungen kann der Permanentmagnet 155 als separates Element auf dem Hauptkörper 152, bevorzugt am Planenverriegelungsbereich 154, angebracht sein.

In weiteren beispielhaften Ausführungsformen kann der Hauptkörper 152 nur teilweise mit dem Permanentmagnet 155 integral ausgeführt sein, d. h. dass zumindest teilweise der Planenbefestigungsbereich 153 und/oder zumindest teilweise der Planenverriegelungsbereich 154 aus einem permanentmagnetischen Material besteht.

Die Welle 142 und/oder die Verriegelungselemente 144 sind dabei aus einem ferromagnetischen Material gebildet, die mit dem Permanentmagnet 155 wechselwirken können, d. h. mit dem Permanentmagnet 155 magnetisch verbunden werden können.

Die Formen des Planenbefestigungsbereichs 153, des Planenverriegelungsbereichs 154, der ersten Öffnung 156 und der zweiten Öffnung 158 sind nicht auf die in der Fig. 3 dargestellten Formen begrenzt und können jegliche Formen aufweisen, die dazu fähig sind, die Plane 120 an der Planenverriegelungsvorrichtung 140 zu befestigen. Beispielsweise kann der Hauptkörper 152 mehrere zweite Öffnungen 158 aufweisen, die mit den Verriegelungselementen 144 eingreifen können.

Die erste Öffnung 156 ist dazu ausgebildet, den Gurt 122 der Plane 120 aufzunehmen, wobei dadurch das Planenbefestigungselement 150 an der Plane 120 befestigt wird. Ferner ist die erste Öffnung 156 dazu ausgebildet, mit einem der Verriegelungselemente 144 einzugreifen, wenn sich das Hubdach 104 in der eingefahrenen Position befindet.

Die zweite Öffnung 158 ist dazu ausgebildet, mit einem zugeordneten Verriegelungselement 144 einzugreifen, wenn sich das Hubdach 104 in einer wenigstens teilweise ausgefahrenen Position befindet. Beispielsweise ist das Hubdach 104 höhenverstellbar, so dass die erste Öffnung 156 bei wenigstens teilweise ausgefahrenem Hubdach 104 mit einem der Verriegelungselemente 144 nicht mehr in Eingriff zu bringen ist. In diesem Fall kann die zweite Öffnung 158 mit einem der Verriegelungselemente 144 in Eingriff gebracht werden. Um den gesamten Bewegungsbereich des Hubdachs 104 abdecken zu können, kann die zweite Öffnung 158 als Langloch ausgebildet sein. Im Übrigen kann das Hubdach um 50 mm oder mehr, insbesondere auch bis 150 mm oder mehr in der Höhe verstellbar sein.

In einer weiteren Ausführungsform können mehrere zweite Öffnungen 158 angeordnet sein, die in Abhängigkeit des Ausfahrbetrags des Hubdachs 104 mit einem der Verriegelungselemente 144 in Eingriff gebracht werden können.

In einer noch weiteren Ausführungsform kann der Hauptkörper 152 ein zweigeteilter Hauptkörper mit einem ersten Hauptkörperteil, das die erste Öffnung 156 aufweist, und einem zweiten Hauptkörperteil, das die zweite Öffnung 158 aufweist, sein. In einer solchen Ausführungsform kann die Plane neben dem wenigstens einen Gurt 122 wenigstens einen zusätzlichen Gurt aufweisen. Dabei kann an dem wenigstens einem Gurt 122 der erste Hauptkörperteil befestigt sein und an dem wenigstens einen zusätzlichen Gurt der zweite Hauptkörperteil befestigt sein. Je nach Ausfahrbetrag des Hubdachs 104 kann der erste oder der zweite Hauptkörperteil mit einem der Verriegelungselemente 144 in Eingriff gebracht werden, um die Plane 120 am unteren Bereich des Rahmengestells 102 zu befestigen.

Die Fig. 4 zeigt eine weitere beispielhafte Ausgestaltung des Planenbefestigungselements 150, das einen mit einem Permanentmagnet 155 integral ausgeführten Hauptkörper 152, einen Planenbefestigungsbereich 153, einen Planenverriegelungsbereich 154 und eine Öffnung 156 aufweist.

Anstatt den Permanentmagnet 155 an den Planenbefestigungselementen 150 anzuordnen, kann der Permanentmagnet 150 erfindungsgemäß auch an den Verriegelungselementen 144 und/oder der Welle 142 vorhanden sein. Dabei kann der Permanentmagnet 155 mit dem entsprechenden Verriegelungselement 144 integral ausgeführt sein oder kann an dem entsprechenden Verriegelungselement 144 als separates Element angebracht sein. Bei solchen Ausgestaltungen sind die Planenbefestigungselemente 150 aus ferromagnetischem Material geformt, die an dem Permanentmagnet 155 haften können, d. h. von dem Permanentmagnet 155 angezogen werden.

Um den Laderaum 114 zu be- oder entladen, wird die Plane 120 wie eine Gardine geöffnet. Um den Laderaum zu vergrößern, kann das Hubdach in die ausgefahrene Position bewegt werden. Nach Beendigung des Be- oder Entladevorgangs wird die Plane wieder in die geschlossene Position gebracht, wobei das Hubdach 104 in der wenigstens teilweise ausgefahrenen Stellung oder der vollständig ausgefahrenen Stellung verbleiben kann.

Daraufhin werden die Planenbefestigungselemente 150 mit den Verriegelungselementen 144 der Planenverriegelungsvorrichtung 140 in Eingriff gebracht. Befindet sich das Hubdach 104 in der eingefahrenen Position, werden die ersten Öffnungen 156 mit den Verriegelungselementen 144 in Eingriff gebracht. Befindet sich jedoch das Hubdach 104 in einer wenigstens teilweise ausgefahrenen Position, werden die zweiten Öffnungen 158 mit den Verriegelungselementen 144 in Eingriff gebracht.

Während dem in Eingriff Bringen der Planenbefestigungselemente 150 mit den jeweiligen Verriegelungselementen 144 befindet sich die Welle 142 in der vollständig entriegelten Position oder in der in der Fig. 2 gezeigten Position zwischen der vollständig verriegelten und der vollständig entriegelten Position. Dadurch werden die Planenbefestigungselemente 150 bereits teilweise mechanisch mit dem jeweiligen Verriegelungselement 144 in Eingriff gehalten. Durch die erfindungsgemäßen Planenbefestigungselemente 150 oder die erfindungsgemäße Planenverriegelungsvorrichtung 140 können die Planenbefestigungselemente 150 mit der Verriegelungsvorrichtung zusätzlich magnetisch verbunden werden. Sind die jeweiligen Öffnungen 156 bzw. 158 mit den Verriegelungselementen 144 in Eingriff gebracht, kann die Welle 122 mittel der Betätigungsvorrichtung in Verriegelungsrichtung V gedreht wird. Dadurch werden sämtliche Verriegelungselemente 144 ebenfalls in der Verriegelungsrichtung V gedreht, so dass die Gurte 122 die Plane 120 in vertikaler Richtung straffen und die Plane 120 somit am Rahmengestell 102 befestigen.

Die magnetische Verbindung zwischen den Planenbefestigungselementen 150 und den Verriegelungselementen 144 verhindert ein vorzeitiges Lösen der beiden Elemente, bevor die Welle 142 in Verriegelungsrichtung V gedreht wird.

Wird die Welle 142 über die Betätigungsvorrichtung in der Entriegelungsrichtung E gedreht, können alle Verriegelungselemente 144 gleichzeitig gedreht werden. In der entriegelten Stellung der Welle 142 sind die Verriegelungselemente 144 relativ zu den Planenbefestigungselementen 150 derart ausgerichtet, dass sich die Planenbefestigungselemente 150 in vertikaler Richtung frei lösen können. Die Permanentmagnete 155 sind bevorzugt derart ausgestaltet, dass die Gewichtskraft der Planenbefestigungselemente 150 die magnetische Anziehungskraft zwischen den Planenbefestigungselementen 150 und den Verriegelungselementen 144 übersteigt, so dass sich die Planenbefestigungselemente 150 bei Drehung der Welle 142 in die vollständig entriegelte Position von den Verriegelungselementen 144 durch Einwirkung der Gewichtskraft lösen können. Daraufhin kann die Plane 120 wieder horizontal wie eine Gardine zum Öffnen des Laderaums 114 bewegt werden.

In einer weiteren Ausgestaltung verbleiben die Planenbefestigungselemente 150 mit den Verriegelungselementen 144 magnetisch verbunden, wenn sich die Welle 142 in der vollständig entriegelten Position befindet. Daraufhin kann die Plane 120 aufgezogen werden. Während dem gardinenartigen Aufziehen/Öffnen der Plane 120 werden die Planenbefestigungselemente 150 von den Verriegelungselementen 144 nacheinander einzeln gelöst.

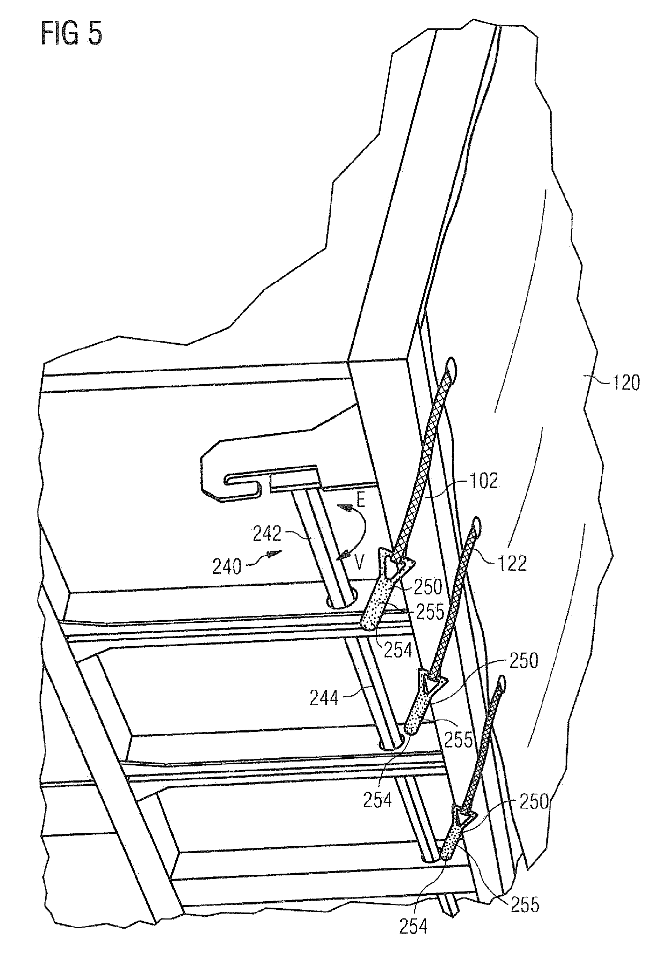

In der Fig. 5 ist eine weitere beispielhafte Ausführungsform eines Planenbefestigungselements 250 und eine weitere beispielhafte Ausgestaltung einer Verriegelungsvorrichtung 240 gemäß der vorliegenden Erfindung dargestellt. Wie in der Fig. 5 gezeigt, weist die Verriegelungsvorrichtung 240 eine drehbar am Rahmengestell 102 angebrachte Welle 242 auf. Die in der Fig. 5 dargestellte Welle 242 hat ein dreieckiges Profil mit zumindest einer Verriegelungskante 244. In weiteren Ausführungsformen kann die Welle 242 jegliches Querschnittsprofil aufweisen, das mit wenigstens einer Verriegelungskante 244 versehen ist, beispielsweise ein Vierkantprofil oder ein Profil mit mehreren Kanten.

Das in der Fig. 5 dargestellte Planenbefestigungselement 250 ist im Wesentlichen wie das Planenbefestigungselement 150 der Fig. 3 ausgebildet, weist jedoch keine zweite Öffnung 158 auf. Somit ist der Hauptkörper jedes Planenbefestigungselements 250 über die erste Öffnung am jeweiligen Gurt 122 befestigt.

Der Planenverriegelungsbereich 254 des in der Fig. 5 gezeigten Planenbefestigungselements 250 ist ein plattenförmiges Element und weist einen Permanentmagnet 255 auf, der mit dem Hauptkörper integral ausgebildet ist. In weiteren Ausführungsformen kann der Permanentmagnet 255 als separates Element am Hauptkörper befestigt sein.

In weiteren Ausführungsformen kann der Hauptkörper teilweise aus permanentmagnetischem Material geformt sein, wobei bevorzugt der Planenverriegelungsbereich 254 zumindest teilweise aus permanentmagnetischem Material besteht. Die Welle 242 ist aus ferromagnetischem Material gebildet, um die Permanentmagnete 255 magnetisch zu halten, d. h. um mit dem Permanentmagnet 255 magnetisch verbunden werden zu können.

In weiteren beispielhaften Ausführungsformen kann die Welle 242 zumindest teilweise aus permanentmagnetischem Material geformt sein oder es sind mehrere Permanentmagnete 255 als zusätzliche Elemente an der Welle 242 angebracht. Bevorzugt ist die Welle 242 in Längsrichtung betrachtet an denjenigen Stellen mit einem Permanentmagnet 255 versehen, die einer Befestigungsposition der Gurte 122 mit einem Planenbefestigungselement 250 entsprechen.

In diesen beispielhaften Ausgestaltungen sind die Planenbefestigungselemente 250 aus ferromagnetischem Material gebildet, um an der Welle 242 magnetisch haften zu können. Dabei ist zumindest eine an die Verriegelungskante 244 angrenzende Seitenfläche der Welle 242 mit einem Permanentmagnet 255 versehen.

Die Verriegelungsvorrichtung 240 der Fig. 5 funktioniert derart, dass zunächst sämtliche Planenbefestigungselemente 250, genauer gesagt die plattenförmigen Planenverriegelungsbereiche 254 der Planenbefestigungselemente 250, mit einer an die Verriegelungskante 244 angrenzenden Seitenfläche der Welle 242 magnetisch verbunden werden. Daraufhin kann die Welle 242 in Verriegelungsrichtung V gedreht werden, wodurch die Planenbefestigungselemente 250 mittels der Verriegelungskante 244 in Verriegelungsrichtung V mitgedreht werden und die Plane 120 über die Gurte 122 gespannt wird.

In einer weiteren Ausgestaltung kann der Planenverriegelungsbereich 254 des Planenbefestigungselements 250 bogenförmig ausgebildet sein, so dass der Planenverriegelungsbereich 254 die Welle 242 zumindest teilweise umgreifen kann.

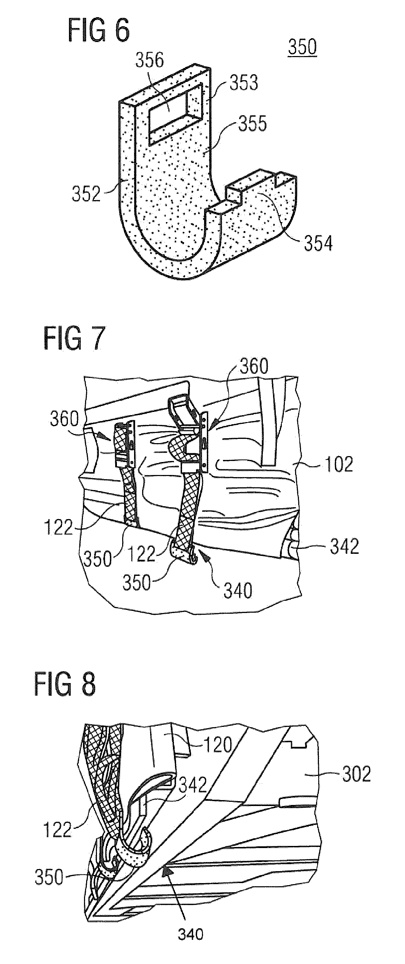

Unter Verweis auf die Fig. 6 bis 8 ist eine weitere beispielhafte Ausführungsform eines Planenbefestigungselements 350 und einer Verriegelungsvorrichtung 340 gezeigt. Die Planenbefestigungselemente 350 sind, wie in den bisher dargestellten Ausführungsformen dargestellt, nicht lösbar mit Gurten 122 verbunden, die an der Plane 120 angebracht sind. Die Planenbefestigungselemente 350 weisen einen Hauptkörper 352 mit einem Planenbefestigungsbereich 353 auf, der mit einer Öffnung 356 versehen ist, über die der Hauptkörper 352 am Gurt 122 nicht lösbar befestigt werden kann.

Der Hauptkörper 352 weist ferner einen Planenverriegelungsbereich 354 in bogenförmiger Gestalt auf, so dass der Planenverriegelungsbereich 354 die Gestalt eines Hakens hat. Der Planenverriegelungsbereich 354 ist bevorzugt U-förmig und dazu ausgebildet, mit einer am Rahmengestell 102 angeordneten Planenverriegelungsleiste 342 (siehe Fig. 7 und 8) einzugreifen.

Wie in der Fig. 6 gezeigt, ist der Hauptköper 352 mit einem Permanentmagnet 355 integral ausgeführt, d. h. der gesamte Hauptkörper 352 ist aus einem permanentmagnetischen Material geformt. In weiteren beispielhaften Ausgestaltungen kann der Permanentmagnet 355 als separates Bauteil am Hauptkörper 352, bevorzugt am Planenverriegelungsbereich 354, angebracht sein.

In weiteren beispielhaften Ausführungen kann der Hauptkörper 352 nur teilweise aus permanentmagnetischem Material geformt sein, wobei bevorzugt der Planenverriegelungsbereich 354 aus permanentmagnetischem Material besteht.

In der Fig. 7 ist das linke Planenbefestigungselement 350 in einem verriegelten Zustand dargestellt, wobei das rechte Planenbefestigungselement 350 der Fig. 7 in einem entriegelten Zustand gezeigt ist. In der Fig. 7 ist ferner dargestellt, dass die Planenbefestigungselemente 350 mit den Gurten 122 jeweils über bekannte Hebelvorrichtungen 360 an der Plane 120 befestigt sind. Die Hebelvorrichtungen 360 weisen einen Hebel auf, der dazu ausgebildet ist, den Gurt 122 zu spannen und so die Plane 120 zu straffen und die Planenbefestigungselemente 350 mit der Planenverriegelungsleiste 342 zu verspannen. In der Fig. 7 ist der linke Hebel in der verriegelten Position, während der rechte Hebel in der entriegelten Position ist.

Die Planenverriegelungsvorrichtung 340 weist die Planenverriegelungsleiste 342 auf, die sich im Wesentlichen entlang des Rahmengestells 102 erstreckt. Die Planenverriegelungsleiste 342 ist bevorzugt ein vertikal nach unten stehender Vorsprung, der mit dem U-förmigen Planenverriegelungsbereich 354 eingreifen kann.

Anstatt die Planenbefestigungselemente 350 mit einem Permanentmagnet 355 zu versehen, können in einer weiteren beispielhaften Ausführungsform mehrere Permanentmagnete 355 an der Planenverriegelungsleiste 342 vorhanden sein, die die jeweiligen Planenbefestigungselemente 350 magnetisch halten können. Hierzu können die Permanentmagnete 355 als separate Elemente an der Planenverriegelungsleiste 342 angebracht sein oder können mit der Planenverriegelungsleiste 342 integral ausgeführt sein.

Um die Plane 120 am Rahmengestell 102 zu befestigen, werden sämtliche Planenbefestigungselemente 350 nacheinander wie folgt mit der Planenverriegelungsvorrichtung 340 in Eingriff gebracht. Zunächst wird das Planenbefestigungselement 350 mit der Planenverriegelungsleiste 342 in Eingriff gebracht, so dass der U-förmige Planenbefestigungsbereich 354 die Planenverriegelungsleiste 342 zumindest teilweise umgreift. Durch die magnetische Wechselwirkung bzw. Verbindung zwischen dem Planenbefestigungselement 350 und der Planenverriegelungsleiste 342 wird das Planenbefestigungselement 350 im eingegriffenen Zustand an der Planenverriegelungsleiste 342 gehalten.

Im nächsten Schritt wird der Hebel der Hebelvorrichtung 360 umgeklappt (in der Fig. 7 nach unten), so dass der Gurt 122 eine vertikal nach oben gerichtete Kraft auf das Planenbefestigungselement 350 aufbringt und so die Plane 120 spannt. Zum Lösen der Plane 120 werden alle Hebel der Hebelvorrichtungen 360 wieder nach oben geklappt und die einzelnen Planenbefestigungselemente 350 von der Planenverriegelungsleiste 342 gelöst.

Die in den Fig. 1 bis 8 dargestellten und beschriebenen Permanentmagneten 155, 255, 355 bestehen beispielsweise aus einem hartmagnetischen Ferritmaterial, aus einer Legierung, die Eisen, Nickel und/oder Aluminium, bevorzugt mit Zusätzen von Kobalt, Mangan und/oder Kupfer, enthält, aus Seltenerde, aus Samarium-Kobalt oder Neodym-Eisen-Bor. In weiteren beispielhaften Ausgestaltungen ist der Permanentmagnet 155, 255, 355 ein aus einem Magnetpulver-Kunststoff-Gemisch bestehender kunststoffgebundener Magnet. In einer bevorzugten Ausgestaltung ist der Hauptkörper 152, 352 aus einem der genannten permanentmagnetischen Materialien geformt oder besteht aus reinem Magnetpulver.

Beispielsweise wird der Permanentmagnet 155, 255, 355 oder der Hauptkörper 152, 352 aus einem kristallinen Pulver hergestellt und in Anwesenheit eines starken Magnetfelds in die gewünschte Form gepresst. Während dem Pressvorgang richten sich die Kristalle mit ihrer bevorzugten Magnetisierungsachse gemäß dem Magnetfeld aus. In einem anschließenden Prozess werden die gepressten Bauteile gesintert, beispielsweise bei einer Temperatur von mehr als 1000 °C. In einem letzten Schritt geschieht die Magnetisierung, also die Aktivierung der im Werkstoff enthaltenen magnetischen Eigenschaften. Üblicherweise erfolgt dies auf dem Wege der Impulsmagnetisierung. Mit Hilfe einer sogenannten Magnetisierungsspule, in die ein oder mehrere Magnete eingebracht werden und die an ein Impulsmagnetisiergerät angeschlossen ist, das die Spule mit der notwendigen Energie versorgt, wird der Magnet aufmagnetisiert.

Obwohl die bevorzugten Ausführungsformen dieser Erfindung hierin beschrieben worden sind, können Verbesserungen und Modifikationen hierin eingearbeitet sein, ohne vom Schutzbereich der folgenden Ansprüche abzuweichen.

## Patentansprüche

1. Planenbefestigungselement (150; 250; 350) zum lösbaren Befestigen einer Plane (120) eines Nutzfahrzeugaufbaus an einem Rahmengestell (102) des Nutzfahrzeugaufbaus, wobei der Nutzfahrzeugaufbau das Rahmengestell (102), das zusammen mit der Plane (120) einen Laderaum (114) begrenzt, und eine am Rahmengestell (102) angebrachte Planenverriegelungsvorrichtung (140; 240; 340) hat, wobei das Planenbefestigungselement (150; 250; 350) aufweist:
- einen Hauptkörper (152; 352), der einen Planenbefestigungsbereich (153; 353), der dazu ausgebildet ist, den Hauptkörper (152; 352) mit der Plane (120) nicht lösbar zu verbinden, und einen Planenverriegelungsbereich (154; 254; 354) aufweist, der dazu ausgebildet ist, mit der Planenverriegelungsvorrichtung (140; 240; 340) lösbar einzugreifen, und
- einen am Hauptkörper (152; 352) vorhandenen Permanentmagnet (155; 255; 355), der dazu ausgebildet ist, an der Planenverriegelungsvorrichtung (140; 240; 340) magnetisch zu haften, wenn der Hauptkörper (152; 352) mit der Planenverriegelungsvorrichtung (140; 240; 340) eingreift.

2. Planenbefestigungselement (150; 250; 350) nach Anspruch 1, wobei der Permanentmagnet (155; 255; 355) und der Planenverriegelungsbereich (154; 254; 354) integral ausgeführt sind.

3. Planenbefestigungselement (150; 250; 350) nach Anspruch 1, wobei der Permanentmagnet (155; 255; 355) am Planenverriegelungsbereich (154; 254; 354) angebracht ist.

4. Planenbefestigungselement (150) nach einem der vorhergehenden Ansprüche, wobei der Hauptkörper (152) wenigstens eine Öffnung (156) aufweist, die im Planenverriegelungsbereich (154) angeordnet und dazu ausgebildet ist, mit der Planenverriegelungsvorrichtung (140) lösbar einzugreifen.

5. Planenbefestigungselement (350) nach einem der Ansprüche 1 bis 3, wobei der Planenverriegelungsbereich (354) ein am Hauptkörper (352) geformter Haken ist, der dazu ausgebildet ist, mit der Planenverriegelungsvorrichtung (340) lösbar einzugreifen.

6. Planenbefestigungselement (250) nach einem der Ansprüche 1 bis 3, wobei der Planenverriegelungsbereich (254) ein am Hauptkörper (352) gebildetes plattenförmiges Element ist, das dazu ausgebildet ist, mit der Planenverriegelungsvorrichtung (240) lösbar einzugreifen.

7. Planenbefestigungselement (150; 250; 350) nach einem der vorhergehenden Ansprüche, wobei der Permanentmagnet (155; 255; 355) und/oder der Hauptkörper (152; 352)wenigstens teilweise mit Kunststoff überzogen ist.

8. Planenbefestigungselement (150; 250; 350) nach einem der vorhergehenden Ansprüche, wobei der Permanentmagnet (155; 255; 355) aus einem hartmagnetischen Ferritmaterial, aus einer Legierung, die Eisen, Nickel und/oder Aluminium, bevorzugt mit Zusätzen von Kobalt, Mangan und/oder Kupfer, enthält, oder einem Magnetpulver-Kunststoff-Gemisch gebildet ist.

9. Planenbefestigungselement (150; 250; 350) nach einem der vorhergehenden Ansprüche, wobei die magnetische Flussdichte des Permanentmagneten (155; 255; 355) einen Wert zwischen ungefähr 0,001 T und 5 T, insbesondere eine Wert zwischen ungefähr 0,001 T und 0,2 T, aufweist, so dass sich der Hauptkörper (152; 352) von der Planenverriegelungsvorrichtung (140; 240; 340) unter Einwirkung der Gewichtskraft lösen kann.

10. Planenverriegelungsvorrichtung (140; 240; 340) zum lösbaren Befestigen einer Plane (120) eines Nutzfahrzeugaufbaus an einem Rahmengestell (102) des Nutzfahrzeugaufbaus, wobei das Rahmengestell (102) zusammen mit der Plane (120) einen Laderaum (114) begrenzt, wobei die Planenverriegelungsvorrichtung (140; 240; 340) aufweist:
- wenigstens ein am Rahmengestell (102) angebrachtes Planenverriegelungselement (144; 242; 342), das dazu ausgebildet ist, mit wenigstens einem an der Plane (120) nicht lösbar befestigten Planenbefestigungselement (150; 250; 350) lösbar einzugreifen und die Plane (120) am Rahmengestell (102) zu befestigen, und
- wenigstens einen am Planenverriegelungselement (144; 242; 342) vorhandenen Permanentmagnet (155; 255; 355), der dazu ausgebildet ist, das wenigstens eine Planenbefestigungselement (150; 250; 350) magnetisch zu halten, wenn das Planenverriegelungselement (144; 242; 352) mit dem Planenbefestigungselement (150; 250; 350) eingreift.

11. Planenverriegelungsvorrichtung (140) nach Anspruch 10, ferner mit einer am Rahmengestell (102) drehbar gelagerten Welle (142), an der das wenigstens eine Verriegelungselement (144) angebracht ist.

12. Planenverriegelungsvorrichtung (140; 240; 340) nach einem der Ansprüche 10 oder 11, wobei das wenigstens eine Verriegelungselement ein Verriegelungshaken (144) oder ein Verriegelungsvorsprung ist.

13. Planenverriegelungsvorrichtung (340) nach Anspruch 10, wobei das wenigstens eine Verriegelungselement eine starr am Rahmengestell (102) angebrachte Verriegelungsleiste (342) ist, die sich im Wesentlichen entlang des Nutzfahrzeugaufbaus erstreckt und dazu ausgebildet ist, mit dem wenigstens einen Planenbefestigungselement (150; 250; 350) einzugreifen.

14. Planenverriegelungsvorrichtung (240) nach Anspruch 10, wobei das Verriegelungselement eine am Rahmengestell (102) drehbar gelagerte Welle (242) ist, die einen Querschnitt mit wenigstens einer Verriegelungskante (244) aufweist.

15. Nutzfahrzeugaufbau, umfassend:
- ein Rahmengestell (102),
- eine am Rahmengestell (102) angebrachte Verriegelungsvorrichtung (140; 240; 340),
- wenigstens eine an einer Seite des Rahmengestells (102) verschiebbar befestigte Plane (120), die zusammen mit dem Rahmengestell (102) einen Laderaum (114) begrenzt, und
- wenigstens ein an der Plane (120) nicht lösbar befestigtes Planenbefestigungselement (150; 250; 350),
wobei entweder das wenigstens eine Planenbefestigungselement (150; 250; 350) gemäß einem der Ansprüche 1 bis 9 ausgebildet ist oder die Verriegelungsvorrichtung (140; 240; 340) nach einem der Ansprüche 10 bis 14 ausgebildet ist.
